# EUROPEAN PATENT APPLICATION

(11) **EP 4 648 491 A1**
(43) Date of publication of application: **12.11.2025**
(21) Application number: 23919556.3
(22) Date of filing: 29.12.2023
(51) Int. Cl.: H04W 52/02

(54) **NETWORK SEARCH DEVICE MANAGEMENT METHOD AND ELECTRONIC DEVICE**

(30) Priority: 31.01.2023 CN 202310128620
(71) Applicant: Huawei Technologies Co., Ltd., Shenzhen, Guangdong 518129 (CN)
(72) Inventor: LIU, Zheng, Shenzhen, Guangdong 518129 (CN); WU, Xianyu, Shenzhen, Guangdong 518129 (CN); LI, Baolong, Shenzhen, Guangdong 518129 (CN); XIA, Ri, Shenzhen, Guangdong 518129 (CN); HU, Shibang, Shenzhen, Guangdong 518129 (CN)
(74) Representative: Pfenning, Meinig & Partner mbB
(86) International application number: PCT/CN2023/143478
(87) International publication number: WO 2024/159996

(57) **Abstract**

A find network device management method and an electronic device are disclosed, to reduce power consumption of managing a find network device. The method is applied to an electronic device, and the electronic device performs pairing and connection with the find network device. In the method, a processor of the electronic device sends accessory management information to a microcontroller unit of the electronic device, where the accessory management information indicates information about interaction between the electronic device and the find network device; and the microcontroller unit receives the accessory management information, and manages the find network device based on the accessory management information. In embodiments of this application, the microcontroller unit of the electronic device performs status management on the find network device, without a need to wake up the processor in a status management process. This reduces power consumption.

## Description

### CROSS-REFERENCE TO RELATED APPLICATIONS

This application claims priority to Chinese Patent Application No. 202310128620.2, filed with the China National Intellectual Property Administration on January 31, 2023 and entitled "FIND NETWORK DEVICE MANAGEMENT METHOD AND ELECTRONIC DEVICE", which is incorporated herein by reference in its entirety.

### TECHNICAL FIELD

This application relates to the field of smart life technologies, and in particular, to a find network device management method and an electronic device.

### BACKGROUND

In recent years, there are more types of electronic devices, for example, a mobile phone, a smart television, a smart speaker, and a head unit device. An electronic device provides more types of services for a user, for example, a find network and a Bluetooth connection. A find network service is to change an electronic device provided with the find network service into a mobile "base station". The find network on the electronic device needs to work with a find network device. There are many forms of find network devices, for example, a tag (TAG) device, a headset, a stylus, and a watch.

Currently, interaction between the electronic device and the find network device needs to be implemented by using a Bluetooth chip and an application processor (application processor, AP), resulting in high power consumption.

### SUMMARY

This application provides a find network device management method and an electronic device, to reduce power consumption of managing a find network device.

According to a first aspect, this application provides a find network device management method, and the method may be applied to an electronic device. Specifically, the method includes: After the electronic device performs pairing and connection with a find network device, a processor of the electronic device sends accessory management information to a microcontroller unit of the electronic device, where the accessory management information indicates information about interaction between the electronic device and the find network device. The microcontroller unit receives the accessory management information, and performs status management on the find network device based on the accessory management information. According to the method, the electronic device can perform status management on the find network device by using the microcontroller unit, without a need to wake up the processor in a status management process. This reduces power consumption.

In a possible implementation, after the microcontroller unit scans a broadcast message to obtain a broadcast scanning result, the microcontroller unit may further determine, based on the accessory management information, the find network device from a find network device corresponding to the broadcast scanning result; and the microcontroller unit establishes a state connection to the find network device, so that the find network device maintains a connected state or a nearby state. This can implement low-power and efficient management of the find network device.

In a possible implementation, the microcontroller unit may further determine a quantity of persistent connections, where the quantity of persistent connections is a quantity of persistent connections currently established between the electronic device and the find network device. The microcontroller unit establishes the state connection to the find network device based on the quantity of persistent connections, to implement efficient management of the find network device.

In a possible implementation, when the quantity of persistent connections is equal to a connection threshold, the microcontroller unit may further establish a short connection to the find network device, so that the find network device maintains the nearby state; or when the quantity of persistent connections is less than a connection threshold, the microcontroller unit may further establish a persistent connection to the find network device, so that the find network device maintains the connected state. This can implement efficient management of the find network device.

In a possible implementation, after the electronic device performs pairing and connection with the find network device, the processor may further send an operation instruction to the microcontroller unit, where the operation instruction instructs the find network device to perform a related operation; and the microcontroller unit may further receive the operation instruction, and send the operation instruction to the find network device. This can implement interaction between the electronic device and the find network device by using the microcontroller unit.

In a possible implementation, when the persistent connection is established between the electronic device and the find network device, the microcontroller unit may further send the operation instruction to the find network device through the persistent connection; or when the persistent connection is not established between the electronic device and the find network device, the microcontroller unit may further establish the short connection to the find network device, and send the operation instruction to the find network device through the short connection. This can implement interaction between the microcontroller unit and the find network device.

In a possible implementation, the processor of the electronic device is not woken up when the microcontroller unit performs status management on the find network device, so that power consumption can be reduced and efficient management of the find network device is implemented.

According to a second aspect, this application provides a find network device management method, and the method may be applied to an electronic device. Specifically, the method includes: When the electronic device is in a screen-off state or a standby state, or when a processor of the electronic device is not woken up, a microcontroller unit of the electronic device scans a broadcast message to obtain a broadcast scanning result, and performs status management on a find network device based on accessory management information and the broadcast scanning result, where the accessory management information indicates information about interaction between the electronic device and the find network device that are already paired. According to the method, a purpose of reducing power consumption can be achieved.

In a possible implementation, after obtaining the broadcast scanning result, the microcontroller unit may further determine, based on the accessory management information, the find network device from a find network device corresponding to the broadcast scanning result; and the microcontroller unit may further establish a state connection to the find network device, so that the find network device maintains a connected state or a nearby state.

In a possible implementation, a method for establishing the state connection between the microcontroller unit and the find network device may further include the following steps:

The microcontroller unit determines a quantity of persistent connections, where the quantity of persistent connections is a quantity of persistent connections currently established between the electronic device and the find network device; and the microcontroller unit establishes the state connection to the find network device based on the quantity of persistent connections.

In a possible implementation, establishing, by the microcontroller unit, the state connection to the find network device based on the quantity of persistent connections includes:

When the quantity of persistent connections is equal to a connection threshold, the microcontroller unit may further establish a short connection to the find network device, so that the find network device maintains the nearby state; or when the quantity of persistent connections is less than a connection threshold, the microcontroller unit may further establish a persistent connection to the find network device, so that the find network device maintains the connected state.

In this manner, the microcontroller unit can implement efficient management of the find network device.

According to a third aspect, this application provides a find network device management apparatus. The find network device management apparatus includes modules/units for performing the method according to the first aspect or any possible design of the first aspect or the method according to the second aspect or any possible design of the second aspect. These modules/units may be implemented by hardware, or may be implemented by hardware by executing corresponding software.

According to a fourth aspect, this application further provides an electronic device, including a processor, a microcontroller unit, and a memory. The memory is configured to store one or more computer programs. When the one or more computer programs stored in the memory are executed by the processor and the microcontroller unit, the electronic device is enabled to perform the find network device management method according to the first aspect and any possible design of the first aspect.

According to a fifth aspect, this application further provides an electronic device, including a microcontroller unit and a memory. The memory is configured to store one or more computer programs. When the one or more computer programs stored in the memory are executed by the microcontroller unit, the electronic device is enabled to perform the find network device management method according to the second aspect and any possible design of the second aspect.

According to a sixth aspect, this application further provides a computer-readable storage medium. The computer-readable storage medium stores instructions. When the instructions are run on an electronic device, the electronic device is enabled to perform the method according to any one of the first aspect, the second aspect, and any possible implementation of any one of the first aspect and the second aspect.

According to a seventh aspect, this application further provides a computer program product. When the computer program product runs on an electronic device, the electronic device is enabled to perform the method according to any one of the first aspect, the second aspect, and any possible implementation of any one of the first aspect and the second aspect.

According to an eighth aspect, an embodiment of this application further provides a chip. The chip includes a processor and a microcontroller unit. The processor sends accessory management information to the microcontroller unit, and the microcontroller unit implements, based on the accessory management information, the find network device management method according to the second aspect and any possible design of the second aspect.

### BRIEF DESCRIPTION OF DRAWINGS

FIG. 1 is a diagram of an application scenario of a find network device management method according to an embodiment of this application;
FIG. 2 is a diagram of a hardware structure of an electronic device according to an embodiment of this application;
FIG. 3 is a block diagram of a software structure of an electronic device according to an embodiment of this application;
FIG. 4 is a schematic flowchart of a find network device management method according to an embodiment of this application;
FIG. 5 is a diagram of a state machine of a find network device according to an embodiment of this application;
FIG. 6 is a schematic flowchart of another find network device management method according to an embodiment of this application;
FIG. 7 is a diagram of a hardware architecture of an electronic device to which a find network device management method is applied according to an embodiment of this application;
FIG. 8 is a block diagram of a software system architecture of an electronic device to which a find network device management method is applied according to an embodiment of this application;
FIG. 9 is a diagram of a structure of a find network device management system according to an embodiment of this application;
FIG. 10 is a schematic flowchart of performing status management on a find network device according to an embodiment of this application; and
FIG. 11 is a complete schematic flowchart of a find network device management method according to an embodiment of this application.

### DESCRIPTION OF EMBODIMENTS

For ease of understanding, descriptions about concepts related to this application are provided as examples for reference.
(1) Bluetooth low energy (Bluetooth low energy, BLE), also referred to as Low Energy Bluetooth, is designed for emerging applications in fields such as health care, fitness, beaconing, and home entertainment. Compared to classic Bluetooth, Bluetooth low energy is intended to provide considerably reduced power consumption and costs while maintaining a similar communication range.
(2) A microcontroller unit (microcontroller unit, MCU), also referred to as single chip microcomputer (Single Chip Microcomputer) or single-chip microcomputer, appropriately reduces a frequency and a specification of a central processing unit (central processing unit, CPU), and integrates peripheral interfaces such as a memory (memory), a USB, an A/D converter, a UART, a PLC, and DMA, and even an LCD drive circuit on a single chip to form a chip-level computer that can provide different combination controls for different applications.
(3) A hardware abstraction layer (hardware abstraction layer, HAL) is a type of abstraction layer, and is a type of special software implemented between hardware and software running on an electronic device. An interface between a software framework and the HAL is defined by a hardware abstraction layer interface definition language (HAL interface definition language, HIDL).
(4) A persistent connection is a connection established between devices, to continuously send data. After the persistent connection is established between the devices, the connection can be maintained.
(5) A short connection is a connection for a single data transmission established between devices. After a device transmits data through the short connection, the short connection is disconnected.

In descriptions of embodiments of this application, "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of' means two or more. In addition, it should be understood that, in descriptions of this application, terms such as "first" and "second" are merely used for distinguishing and description, but should not be understood as indicating or implying relative importance, or should not be understood as indicating or implying a sequence. The following describes in detail embodiments of this application with reference to accompanying drawings.

Currently, there are more types of electronic devices, for example, a mobile phone, a smart television, a smart speaker, and a head unit device. An electronic device provides more types of services for a user, for example, a find network and a Bluetooth connection. A find network service may change an electronic device provided with the find network service into a mobile "base station". The find network on the electronic device needs to work with a find network device. In some examples, the find network device may also be referred to as a positioned device. The positioned device may receive a signal used to find a network or perform positioning; or the find network device may send a signal used to find a network or perform positioning. There are many forms of find network devices, for example, a tag (TAG) device, a headset, a stylus, and a watch. For example, a device that can achieve a network finding function may be referred to as a find network device. However, the find network device may further implement some other functions. For example, a headset may further implement functions such as music playing and calls, and a watch may further implement functions such as a message reminder, physiological parameter monitoring, and calls.

Currently, the electronic device may interact with the find network device by driving a Bluetooth chip through a system Bluetooth protocol stack. However, the interaction needs to run when an application processor (application processor, AP) is activated, resulting in high power consumption.

In view of this, embodiments of this application provide a find network device management method and an electronic device. The electronic device includes a processor and a microcontroller unit (microcontroller unit, MCU). In the method, after the electronic device performs pairing and connection with a find network device, the electronic device may send accessory management information to the MCU by using the processor. The accessory management information indicates information about interaction between the electronic device and the find network device. The MCU receives the accessory management information from the processor, and performs status management on the find network device based on the accessory management information. In the status management process, the processor may not be woken up, so that power consumption can be reduced.

The following describes in detail embodiments of this application with reference to accompanying drawings.

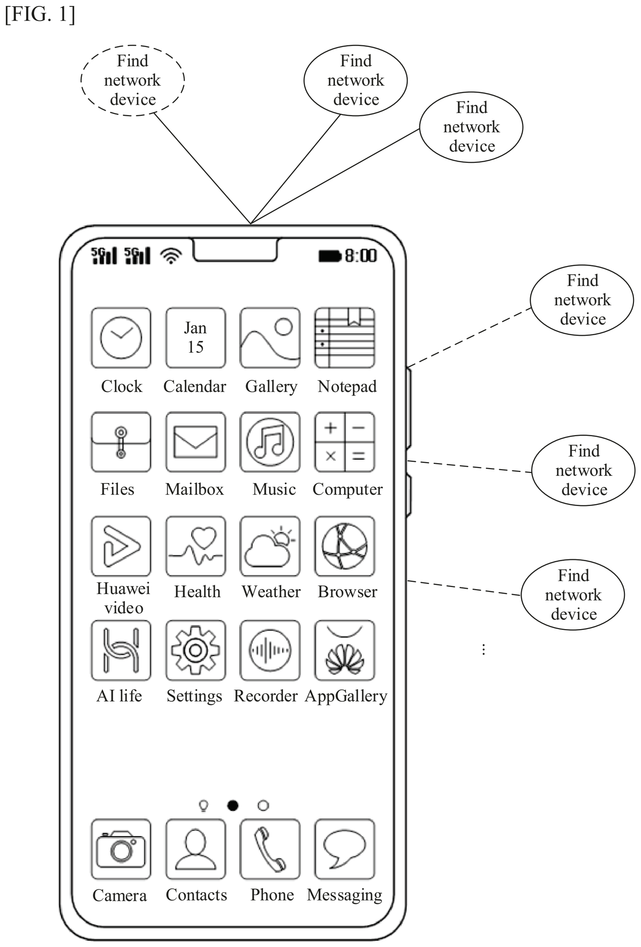

FIG. 1 is a diagram of an application scenario of a find network device management according to an embodiment of this application. As shown in FIG. 1, the application scenario includes an electronic device and at least one find network device. The electronic device may be any electronic device that supports a find network service. For example, the electronic device may be a device such as a mobile phone, a tablet computer, a notebook computer, an ultra-mobile personal computer (ultra-mobile personal computer, UMPC), a netbook, a smart television, or a smart speaker device. It may be understood that a specific type of the electronic device is not limited in embodiments of this application.

In some embodiments, the electronic device includes a processor and a microcontroller unit. The processor may be an AP.

In some embodiments, before performing status management on the find network device, the electronic device needs to perform pairing and connection with the find network device.

In some examples, after successfully pairing with the find network device, the electronic device may be connected to the find network device through a persistent connection, or may be connected to the find network device through a short connection. For example, the connection established between the electronic device and the find network device may be a Bluetooth connection, or may be another wireless connection, such as a cellular connection, a Wireless Fidelity (wireless fidelity, Wi-Fi) connection, or a ZigBee (ZigBee) connection. Embodiments of this application are applicable to a network finding solution based on the Bluetooth connection, or are applicable to a network finding solution based on the another wireless connection.

A quantity of persistent connections between the electronic device and the find network device is limited. When there are excessive find network devices, the electronic device is connected to the find network device through the short connection. For example, a maximum quantity of persistent connections of the electronic device may be 7, 8, 9, 10, or more, but a few persistent connections such as 3, 4, 5, or 6 persistent connections may be used for the find network service in the electronic device.

For example, when the electronic device establishes a maximum of seven persistent connections simultaneously, to avoid occupying all connection resources, the find network service in the electronic device occupies a maximum of three persistent connections simultaneously. An example in which the find network service in the electronic device may use three persistent connections is used to describe an application scenario of find network device management. In FIG. 1, solid lines represent a persistent connection, and dashed lines represent a short connection. As shown in FIG. 1, the electronic device is connected to three find network devices through the persistent connection, and the electronic device is connected to another find network device through the short connection.

In some embodiments, after the electronic device performs pairing and connection with the find network device, the electronic device sends the accessory management information to the MCU by using the processor. The accessory management information indicates the information about interaction between the electronic device and the find network device. The MCU receives the accessory management information, and performs status management on the find network device based on the accessory management information. In the status management process, the AP may not be woken up, so that power consumption can be reduced.

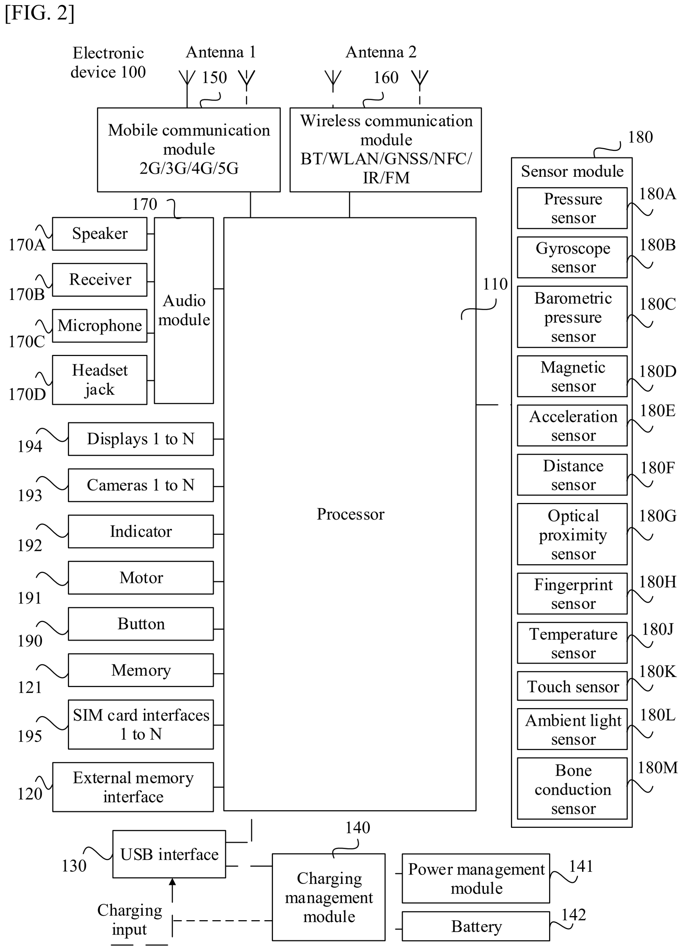

FIG. 2 is a diagram of a possible hardware structure of an electronic device. As shown in FIG. 2, the electronic device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a microcontroller unit (MCU), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device. The charging management module 140 is configured to receive a charging input from the charger. The power management module 141 is configured to connect to the battery 142, the charging management module 140, and the processor 110. The power management module 141 receives an input from the battery 142 and/or the charging management module 140, and supplies power to the processor 110, the memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to: transmit and receive an electromagnetic wave signal. Each antenna in the electronic device 100 may be used to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), a fifth generation (the fifth generation, 5G) mobile communication system, a future communication system, for example, a 6th generation (6th generation, 6G) system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. In this embodiment of this application, the display 194 may be configured to display a home screen, an application interface, a granularity adjustment control, and the like.

The camera 193 is configured to capture a static image or a video. The camera 193 may include a front-facing camera and a rear-facing camera.

The memory 121 may be configured to store computer-executable program code. The executable program code includes instructions. The processor 110 runs the instructions stored in the memory 121, to perform various function applications and data processing of the electronic device 100. The memory 121 may include a program storage area and a data storage area. The program storage area may store an operating system, software code of at least one application (such as Huawei Video and MeeTime), and the like. The data storage area may store data (for example, an image or a video) and the like that are generated during use of the electronic device 100. In addition, the memory 121 may include a high-speed random access memory, or may further include a nonvolatile memory, for example, at least one magnetic disk storage device, a flash memory, or a universal flash storage (universal flash storage, UFS).

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as pictures or videos are stored in the external memory card.

The electronic device 100 may implement an audio function, for example, music playing and recording, through the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a moving posture of the electronic device 100. In some embodiments, an angular velocity of the electronic device 100 around three axes (namely, axes x, y, and z) may be determined through the gyroscope sensor 180B.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation. The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover. The acceleration sensor 180E may detect accelerations of the electronic device 100 in various directions (usually on three axes). When the electronic device 100 is still, the acceleration sensor 180E may detect a magnitude and a direction of gravity. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing. The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch. The fingerprint sensor 180H is configured to collect a fingerprint. The electronic device 100 may implement fingerprint unlock, application access lock, fingerprint photographing, fingerprint-based call answering, and the like by using a feature of the collected fingerprint.

The temperature sensor 180J is configured to detect a temperature. In some embodiments, the electronic device 100 executes a temperature processing strategy through the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a location different from that of the display 194. In some embodiments of this application, the touch sensor 180K may detect a gesture operation of the user on the display, for example, may detect a tap operation of the user on a granularity adjustment control "+". Then, the electronic device 100 may send a topic granularity adjustment request message to a server in response to the tap operation. Correspondingly, the server may feed back topic content with an increased topic granularity to the electronic device 100, and the electronic device 100 may display the topic content with the increased topic granularity.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100.

It may be understood that the components shown in FIG. 2 constitute no specific limitation on the mobile phone. The mobile phone may alternatively include more or fewer components than those shown in the figure, or a combination of some components, or splits from some components, or a different component layout. In the following embodiments, the electronic device 100 shown in FIG. 2 is used as an example for description.

An operating system (operating system, OS) in embodiments of this application is the most basic system software running on the electronic device 100. A software system of the electronic device 100 may use a layered architecture, an event-driven architecture, a microkernel architecture, a micro service architecture, or a cloud architecture. In this embodiment of this application, an operating system using a layered architecture is used as an example to describe a software system architecture of the electronic device 100.

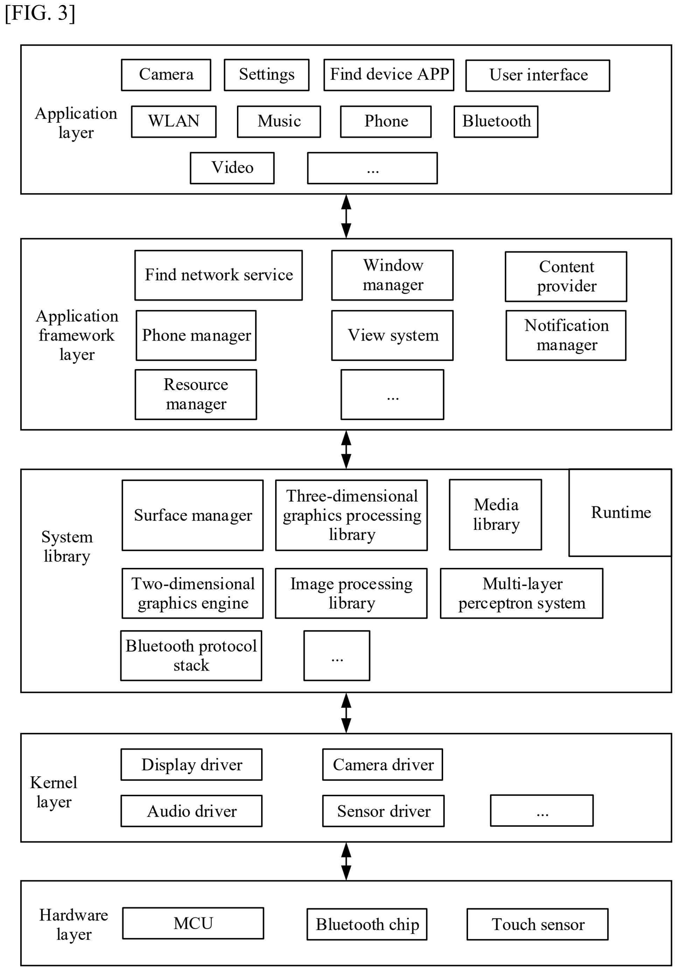

FIG. 3 is a block diagram of a software system architecture of an electronic device according to an embodiment of this application. As shown in FIG. 3, the software system architecture of the electronic device may be a layered architecture. For example, software may be divided into several layers, and each layer has a clear role and task. The layers communicate with each other through a software interface. In some embodiments, the operating system is divided into five layers: an application layer, an application framework (framework, FWK) layer, a system library, a kernel layer, and a hardware layer from top to bottom.

The application layer (or may be briefly referred to as an "application layer") may include a series of application packages. As shown in FIG. 3, the application layer may include a camera, a setting, a find device app, a user interface (user interface, UI), and the like. The third-party application may include a wireless local area network (wireless local area network, WLAN), music, a call, Bluetooth, a video, and the like.

For example, in this embodiment of this application, the application layer may present a device management capability. The device management capability may include, for example, information such as device discovery, device binding, device collaboration, status management, and device negotiation.

For another example, in this embodiment of this application, the application layer may achieve a distributed data management function, for example, support projection between devices, a distributed camera, and device distributed connection status information.

For another example, in this embodiment of this application, the application layer may further achieve an external interaction function, for example, flow task management, external service access, and device data provision.

In a possible implementation, an application may be developed by using a Java language, and is completed by invoking an application programming interface (application programming interface, API) provided by the application framework layer. A developer may interact with a bottom layer of the operating system (for example, a hardware layer or a kernel layer) by using the application framework layer (also referred to as a "framework layer"), to develop an application of the developer. The application framework layer mainly includes a series of services and management systems of the operating system.

The application framework layer provides an application programming interface and a programming framework for an application of the application layer. The application framework layer includes some predefined functions. As shown in FIG. 3, the application framework layer may include a find network service, a window manager, a content provider, a view system, a phone manager, a resource manager, a notification manager, and the like.

The find network service is used to manage a find device app displayed on the electronic device, for example, establish a connection to a find network device, and perform service management on the find network device.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including a video icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

In this embodiment of this application, the application framework layer is mainly responsible for invoking a service interface that communicates with the hardware layer, and has transferred, to the hardware layer, an operation request for performing an operation by the user. The operation request may include a find network request that is triggered by the user by using the display unit 260 and that is of the find device app, and the like.

A runtime includes a core library and a virtual machine. The runtime is responsible for scheduling and management of the operating system.

The core library includes two parts: a function that needs to be invoked in Java language, and a core library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library (which may also be referred to as a "system service layer") may include a plurality of functional modules, for example, a surface manager (surface manager), a media framework (media framework), a three-dimensional graphics processing library (for example, OpenGL ES), a two-dimensional graphics engine (for example, SGL), a multi-layer perceptron system (multi-layer perceptron system, MLPS), and a Bluetooth protocol stack.

The surface manager is configured to: manage a display subsystem and provide fusion of 2D and 3D layers for a plurality of applications.

The media framework supports playing and recording in a plurality of commonly used audio and video formats, and static image files. The media framework may support a plurality of audio and video coding formats such as MPEG-4, H.264, MP3, AAC, AMR, JPG, and PNG.

The three-dimensional graphics processing library is used to implement three-dimensional graphics drawing, image rendering, composition, layer processing, and the like.

The two-dimensional graphics engine is a drawing engine for two-dimensional drawing.

The multi-layer perceptron system is used to encapsulate an MCU interface for use by a find network service.

The Bluetooth protocol stack is used to initiate Bluetooth connection and interaction operations.

In this embodiment of this application, the system layer may be used to shield a difference between a protocol and communication, and provide unified system device discovery, connection, authentication, networking, transmission, cross-device instruction scheduling, data synchronization, and the like. For example, the system layer may further include a soft bus, and the soft bus is responsible for discovery, connection, authentication, networking, data transmission, and the like, to support device discovery and data channel capabilities of the electronic device.

Although not shown in FIG. 3, in this embodiment of this application, the system layer may further include a storage module, an account module, a connection module, a device attribute module, a distributed data management service, a tag service, a distributed execution framework (or may be referred to as "distributed scheduling") (distributed execution framework, DEF), HiChain, and the like. The distributed data management service is responsible for system-level data synchronization to implement high-reliability and low-latency distributed data interaction.

The kernel layer is a layer between hardware and software. The kernel layer includes at least a display driver, a camera driver, an audio driver, and a sensor driver. In this embodiment of this application, the kernel layer may be further understood as a protocol adaptation layer, and may be used to adapt to different protocols, so as to access different electronic devices. For example, the kernel layer may include a WLAN protocol, a Bluetooth protocol, a Bluetooth low energy (Bluetooth low energy, BLE) protocol, and an Ethernet protocol.

The hardware layer may include an MCU, a Bluetooth chip, and various sensors such as a touch sensor.

The MCU is configured to: encapsulate logic such as Bluetooth scanning and accessory status management in the MCU, and interact with the Bluetooth chip to complete a capability of managing a find network device.

Generally, the electronic device 100 may run a plurality of applications at the same time. In a simple case, one application may correspond to one process, and in a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one item (piece) of a, b, or c may indicate a, b, c, a and b, a and c, b and c, or a, b, and c, where a, b, and c may be singular or plural. "A plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, it should be understood that, in descriptions of this application, terms such as "first" and "second" are merely used for distinguishing and description, but should not be understood as indicating or implying relative importance, or should not be understood as indicating or implying a sequence.

It should be understood that the hardware structure of the electronic device may be shown in FIG. 2, and the software system architecture may be shown in FIG. 3. A software program and/or a module corresponding to the software system architecture of the electronic device may be stored in the memory. The processor may run the software program and an application that are stored in the memory, to perform a procedure of a find network device management method provided in embodiments of this application.

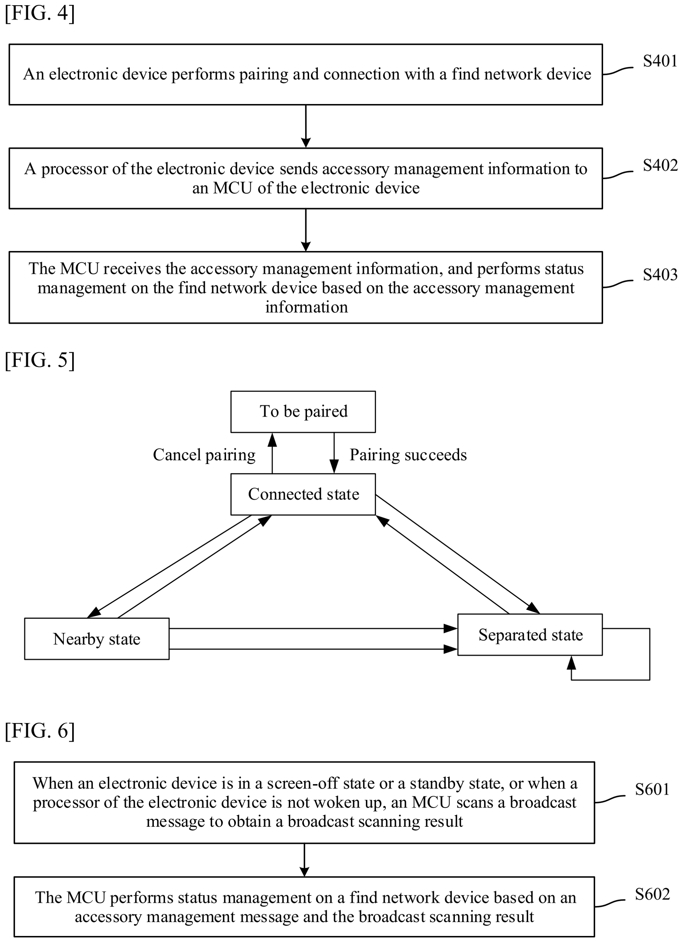

To facilitate understanding of the find network device management method provided in this application, the following describes, with reference to content shown in FIG. 4 to FIG. 11, an implementation process of the method provided in this application.

The following describes the solutions provided in this application with reference to specific embodiments.

FIG. 4 is a diagram of a find network device management method according to an embodiment of this application. The method is applied to an electronic device. As shown in FIG. 4, the method includes the following steps.

S401: The electronic device performs pairing and connection with a find network device.

In some embodiments, a connection established by the electronic device by performing pairing and connection with the find network device may be a Bluetooth connection, or may be another wireless connection, for example, a cellular connection, a Wi-Fi connection, or a ZigBee connection. The Bluetooth connection is used as an example to describe a process in which the electronic device performs pairing and connection with the find network device.

A1: The electronic device scans a to-be-paired broadcast in response to a find network enabling operation triggered by a user on the electronic device.

In some embodiments, the user may enable find network of a find network app installed on the electronic device, to find a find network device near the electronic device. In response to the find network enabling operation triggered by the user, the electronic device determines a scanning characteristic value of a BLE broadcast to be paired with the electronic device. The scanning characteristic value is used to limit a find network device to be paired with the electronic device.

The electronic device determines the to-be-paired broadcast based on the scanning characteristic value.

In some embodiments, the electronic device may use, as the to-be-paired broadcast, a broadcast that is in a broadcast obtained through scanning and that matches the scanning characteristic value.

A2: The electronic device obtains broadcast information from the to-be-paired broadcast.

In some embodiments, the broadcast information includes but is not limited to an ID and distance information of the find network device.

A3: Based on the broadcast information, the electronic device performs pairing and connection with the find network device corresponding to the to-be-paired broadcast.

In some embodiments, the electronic device determines, based on the broadcast information, whether to initiate pairing.

In some examples, the electronic device may determine, based on the distance information in the broadcast information, whether to initiate pairing.

When the electronic device determines, based on the distance information, that a distance between the electronic device and the find network device is within a specified distance, the electronic device determines to initiate pairing. For example, when the electronic device determines that the distance between the electronic device and the find network device is within 50 centimeters, the electronic device determines to initiate pairing.

In this embodiment of this application, after determining to initiate pairing, the electronic device may generate a pop-up pairing notification. The electronic device connects to a general attribute protocol (general attribute protocol, GATT) service of the find network device in response to a pairing operation triggered by the user, to perform pairing and connection with the find network device.

In some embodiments, the electronic device sends a configuration request to the find network device, receives a configuration response returned by the find network device, and completes pairing and connection with the find network device. For example, the electronic device may implement pairing and connection with the find network device by using a processor of the electronic device, or an MCU of the electronic device, or another component that has a Bluetooth connection function in the electronic device.

In this embodiment of this application, a process in which the electronic device performs pairing and connection with the find network device may be the same as a process in which the electronic device performs pairing and connection with the find network device in the conventional technology. Details are not described herein again.

In some embodiments, in the process in which the electronic device performs pairing and connection with the find network device, a shared key is generated, and is jointly held by the electronic device and the find network device. The shared key varies with time. Specifically, the shared key may be a long term key (long term key, LTK) i, where i represents a rotation number.

For example, when the electronic device and the find network device are connected through a persistent connection, a rotation number i in LTKi may be increased by 1 every 12 hours, 24 hours, or 36 hours. When the electronic device and the find network device are connected through a short connection, a rotation number j in LTKj may be increased by 1 every 15 minutes, 30 minutes, or 60 minutes.

S402: The processor of the electronic device sends accessory management information to the MCU of the electronic device.

In some embodiments, the processor may be an AP for which a find network service is configured. The find network service is used to provide a required underlying service for the find network service, implement core service logic, and open an interface for use by an app.

In some embodiments, the accessory management information indicates information about interaction between the electronic device and the find network device that are already paired. The accessory management information includes but is not limited to: key information, and the ID of the find network device. For example, the ID of the find network device may be a serial number of the find network device, or may be product code of the find network device.

In some embodiments, after the electronic device performs pairing and connection with the find network device, the processor obtains the accessory management information.

In some examples, the processor may obtain a list of public keys and a list of shared keys of the find network device based on the find network service. The list of public keys includes the ID of the find network device and a public key corresponding to the find network device. The list of shared keys includes the ID of the find network device, and LTKi and LTKj that correspond to the find network device, where i and j represent rotation numbers.

In some examples, the processor may obtain the list of public keys of the find network device from a find network cloud. The list of public keys may be pre-stored in the find network cloud.

The processor uses the list of public keys and the list of shared keys as the accessory management information, and sends the accessory management information to the MCU of the electronic device. The MCU receives and stores the accessory management information.

S403: The MCU receives the accessory management information, and performs status management on the find network device based on the accessory management information.

In some embodiments, after receiving the accessory management information, the MCU of the electronic device maintains, based on the accessory management information, a state machine of the find network device, to perform status management on the find network device.

In some embodiments, as shown in FIG. 5, an embodiment of this application provides a diagram of a state machine of a find network device. When an electronic device performs pairing with the find network device, the find network device is in a to-be-paired state. When the find network device is in the to-be-paired state, the find network device sends a to-be-paired broadcast, and waits to be paired with the electronic device. For example, when the find network device is in the to-be-paired state, some other electronic devices may also find the find network device, and perform pairing and connection with the find network device. After the find network device is paired with and connected to the electronic device, the find network device enters a connected state from the to-be-paired state. For example, when the find network device is in the connected state, some other electronic devices generally cannot find the find network device. When the electronic device cancels pairing, the find network device enters the to-be-paired state from the connected state, and waits to be paired with the electronic device.

As shown in FIG. 5, after the find network device is disconnected from the electronic device, the find network device is switched from the connected state to a nearby state. When the find network device is in the nearby state, the find network device sends a nearby broadcast, and waits to be connected to the electronic device. After the electronic device obtains the nearby broadcast through scanning and establishes a connection to the find network device, the find network device enters the connected state from the nearby state. When time in which the find network device is in the nearby state is greater than set time or the find network device is restarted, the find network device enters a separated state from the nearby state. The set time may be set to 15 minutes. For example, the find network device is in the nearby state within 15 minutes after disconnection. For another example, when the time in which the find network device is in the nearby state is greater than 15 minutes, the find network device is switched from the nearby state to the separated state. When the find network device is in the separated state, the find network device sends a separate broadcast, and waits to be connected to the electronic device. After the electronic device obtains the separate broadcast through scanning and establishes a connection to the find network device, the find network device enters the connected state from the separated state. In addition, when the find network device in the separated state is restarted, the find network device is still in the separated state.

In some embodiments, when the electronic device is near the find network device, the electronic device needs to perform status management on the find network device, so that the find network device maintains the nearby state or the connected state.

In some examples, when the electronic device is in a screen-off state or a standby state, or when the processor of the electronic device is not woken up, the MCU of the electronic device may perform status management on the find network device based on the accessory management information, to reduce power consumption. Because the processor does not need to be woken up in a status management process, management efficiency of the find network device can be improved.

FIG. 6 is a diagram of another find network device management method according to an embodiment of this application. The method is applied to an electronic device. As shown in FIG. 6, the method includes the following steps.

S601: When the electronic device is in a screen-off state or a standby state, or when a processor of the electronic device is not woken up, an MCU scans a broadcast message to obtain a broadcast scanning result.

In some embodiments, the MCU may scan the broadcast message by using a Bluetooth chip of the electronic device, to obtain the broadcast scanning result. For example, the broadcast message includes but is not limited to a separate broadcast and a nearby broadcast.

In some examples, the MCU may scan the nearby broadcast and the separate broadcast by using the Bluetooth chip, to determine whether a find network device on which status management needs to be performed exists near the electronic device.

S602: The MCU performs status management on the find network device based on an accessory management message and the broadcast scanning result.

In some embodiments, the MCU may determine, based on the accessory management information, the find network device from a find network device corresponding to the broadcast scanning result.

In some examples, the MCU may determine, based on the accessory management information, whether the find network device corresponding to the broadcast scanning result includes a self-owned device. The self-owned device is a find network device that has performed pairing and connection with the electronic device.

After the MCU determines that the find network device corresponding to the broadcast scanning result is a self-owned device, the MCU establishes a state connection to the find network device, so that the find network device maintains a connected state or a nearby state.

In some embodiments, the MCU may establish the state connection to the find network device in the following manner.

The MCU determines a quantity of persistent connections, and establishes the state connection to the find network device based on the quantity of persistent connections. The quantity of persistent connections is a quantity of persistent connections currently established between the electronic device and the find network device. For example, when the electronic device establishes a persistent connection to one find network device, there is one persistent connection; when the electronic device establishes a persistent connection to two find network devices, there are two persistent connections; and so on.

In some embodiments, the MCU may determine whether the quantity of persistent connections reaches a connection threshold, to determine whether to establish a persistent connection to the find network device.

In some embodiments, when the quantity of persistent connections is less than a connection threshold, the MCU establishes the persistent connection to the find network device, so that the find network device maintains the connected state.

In some embodiments, the MCU may send a check message to the find network device by invoking a GATT interface of the electronic device. The check message is sent after being encrypted with a shared key. After receiving the check message, the find network device decrypts the check message based on the shared key, and returns a check response to the electronic device. After receiving the check response, the MCU establishes the persistent connection to the find network device.

After the MCU establishes the persistent connection to the find network device, the electronic device keeps connected to the find network device by using the Bluetooth chip, so that the find network device is always in the connected state.

For example, the connection threshold may be set to 3. After determining that the find network device is a self-owned device, the MCU determines that the quantity of persistent connections is 0, which does not reach the connection threshold. The MCU initiates a persistent connection to the find network device and establishes the persistent connection to the find network device.

In some embodiments, when the quantity of persistent connections reaches the connection threshold, the MCU establishes a short connection to the find network device, so that the find network device maintains the nearby state.

In some examples, when determining that the quantity of persistent connections reaches the connection threshold, the MCU initiates the short connection to the find network device, and establishes the short connection to the find network device. After the short connection is established between the find network device and the electronic device, the find network device enters the connected state from a separated state or the nearby state. The MCU may send a disconnection instruction to the find network device through the short connection, to disconnect from the find network device. After the find network device is disconnected from the MCU of the electronic device, the find network device enters the nearby state from the connected state. A process in which the MCU initiates the short connection is the same as a process in which the MCU initiates the persistent connection. Details are not described herein again.

For example, the connection threshold is 3. When determining that the quantity of persistent connections is 3, the MCU initiates a short connection to the find network device, and establishes the short connection to the find network device. After the short connection is established between the find network device and the MCU, the find network device enters the connected state. After establishing the short connection to the find network device, the MCU sends the disconnect instruction to the find network device, and disconnects from the find network device, so that the find network device enters the nearby state from the connected state.

When the processor is not woken up, or when the electronic device is in the screen-off state or the standby state, the MCU may scan the broadcast message to obtain the broadcast scanning result, and perform status management on the find network device based on the accessory management information and the broadcast scanning information. In this status management process, an AP does not need to be woken up, so that power consumption overheads are reduced. In addition, when there are excessive find network devices, the electronic device does not need to perform scanning suppression, so that a service success rate of a find network service is improved.

In some embodiments, while being responsible for maintaining a state of the find network device, the MCU may further process all interactions between the find network service and the find network device except pairing and connection.

In some embodiments, in response to an operation triggered by a user on the electronic device, the processor generates an operation instruction, and sends the operation instruction to the MCU. The operation instruction instructs the find network device to perform a related operation. The related operation may be an operation triggered by the user on the electronic device. For example, the operation triggered by the user on the electronic device includes but is not limited to: an unpairing operation, a ringing operation, a near field search operation, and a quick lost reminder operation. For example, when the operation triggered by the user is the unpairing operation, the operation instruction instructs the find network device to perform the unpairing operation.

The MCU receives an operation instruction from the processor, and sends the operation instruction to the find network device.

In some embodiments, after receiving the operation instruction, the MCU determines whether the electronic device establishes a persistent connection to a find network device corresponding to the operation instruction.

In some embodiments, when the electronic device establishes the persistent connection to the find network device, the MCU sends the operation instruction to the find network device through the persistent connection.

In some embodiments, when the electronic device does not establish the persistent connection to the find network device, the MCU initiates a connection to the find network device, and establishes a short connection to the find network device. The MCU sends the operation instruction to the find network device through the short connection, so that the find network device performs a related operation based on the received operation instruction.

In some embodiments, all operation instructions sent by the MCU may be encrypted by using a shared key.

In some embodiments, when a distance between the electronic device and the find network device is greater than a specified distance, the find network device is disconnected from the electronic device. After determining that the find network device is disconnected from the electronic device, the MCU determines whether the find network device is configured with a quick lost reminder.

When the find network device is configured with a quick fall reminder, the MCU may report a disconnection status to the find network service, and the find network service reminds the user that the find network device is lost. For example, after the MCU reports the disconnection status to the find network service, the find network service generates lost reminder information, and displays the information on a display interface of a find device app, to indicate the user that the find network device is lost.

In this embodiment of this application, after performing pairing and connection with the find network device, the processor of the electronic device sends the accessory management information to the MCU of the electronic device, and the MCU subsequently performs status management on the find network device based on the accessory management information. In this status management process, an AP does not need to be woken up, so that power consumption overheads are reduced. In addition, when there are excessive find network devices, scanning suppression does not need to be performed, so that a service success rate is improved.

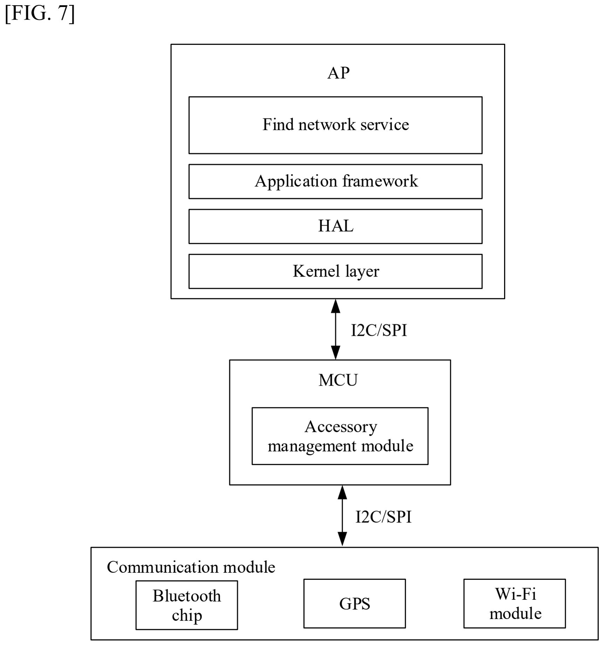

As shown in FIG. 7, an embodiment of this application provides a diagram of a hardware architecture of an electronic device to which a find network device management method is applied. The electronic device includes an application processor (AP), a microcontroller unit (MCU), and a communication module.

The AP includes a find network service, an application framework, an HAL, and a kernel layer. The MCU includes an accessory management module. The communication module includes a Bluetooth chip, a global positioning system (global positioning system, GPS), and a wireless fidelity (Wi-Fi) module. The AP and the MCU exchange data through an inter-integrated circuit (inter-integrated circuit) bus/shared peripheral interrupt (shared peripheral interrupt, SPI). The MCU and the communication module also exchange data through the 12C/the SPI.

In some embodiments, in response to a find network enabling operation triggered by a user, the find network service in the AP may perform pairing and connection with a find network device by using the Bluetooth chip. The find network service sends the accessory management information to the accessory management module in the MCU after the electronic device successfully performs pairing with the find network device. The accessory management module in the MCU can store the accessory management information.

The MCU may scan a broadcast message by using the communication module, to obtain a broadcast scanning result. The MCU may perform, based on the obtained broadcast scanning result and the accessory management information, status management on the find network device by using the accessory management module. The MCU may perform status management on the find network device when the electronic device is in a screen-off state or a standby state, or when the AP is not woken up.

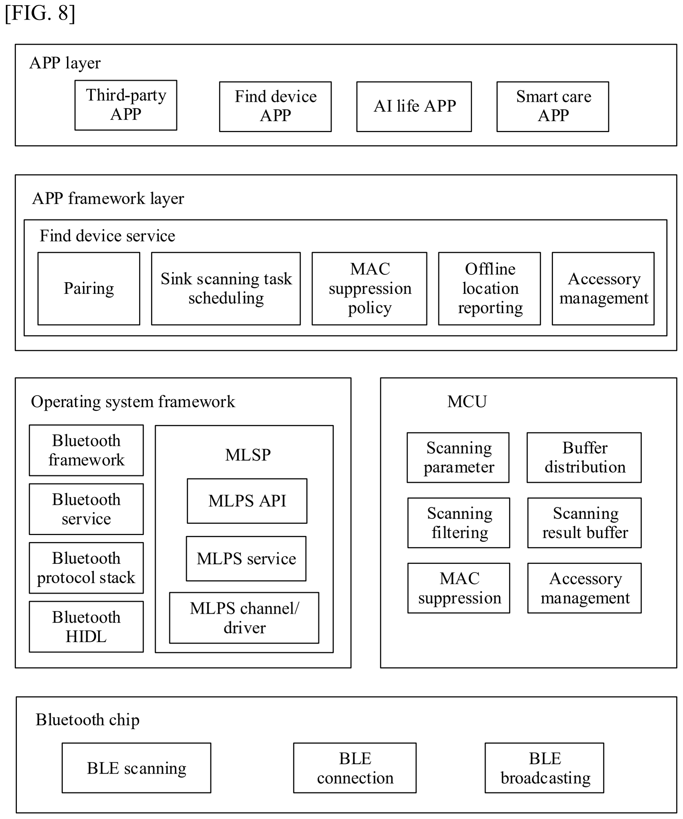

As shown in FIG. 8, an embodiment of this application provides a block diagram of a software system architecture of an electronic device to which a find network device management method is applied. The system includes an app layer, an app framework layer, an operating system framework layer, an MCU layer, and a Bluetooth chip.

The app layer includes apps that use various find network services, for example, a find device app, an AI life app, a smart care app, and a third-party app. For example, the find device app may be used to find a device such as a TAG device, the AI life app may be used to find a device such as a headset, a selfie stick, or a PC, the smart care app may be used to find a device such as a child watch, and the third-party app may be used to find a device such as a wearable or a wireless headset of another vendor.

The app framework layer may include a find device service. The find device service includes modules such as pairing, sink scanning task scheduling, media access control address (media access control address, MAC) suppression policy, offline location reporting, and accessory management.

The operating system framework layer includes a Bluetooth framework, a Bluetooth protocol stack, a Bluetooth service, a Bluetooth HIDL, and an MLSP. The MLSP may include an MLPS API, an MLSP service, and an MLPS channel/driver.

The MCU layer includes modules such as scanning parameter, scanning filtering, buffer distribution, MAC suppression, scanning result buffer, and accessory management.

The Bluetooth chip may include modules such as BLE scanning, BLE connection, and BLE broadcasting.

In this embodiment of this application, the find device service configures, to an accessory management module in the MCU, service logic and algorithm for find network device management in an accessory management module in the find device service. In view of this, the accessory management module in the MCU may perform all interaction operations between the find device service and the find network device except pairing. When the interaction operation is implemented, the AP may not be woken up, to reduce power consumption of the electronic device.

In some embodiments, as shown in FIG. 8, the user may trigger, in the find device app, a find network enabling operation. The pairing module in the find device service invokes a Bluetooth protocol stack interface to start BLE scanning. The Bluetooth chip receives a scanning characteristic value sent by the Bluetooth protocol stack, and scans a to-be-paired broadcast by using the BLE scanning module and the scanning characteristic value.

In some embodiments, after obtaining the to-be-paired broadcast through scanning, the Bluetooth chip reports broadcast information in the to-be-paired broadcast to the Bluetooth protocol stack. The Bluetooth protocol stack sends the broadcast message to the pairing module in the find network service.

The pairing module in the find device service determines, based on the broadcast information, whether to initiate pairing. In addition, after determining to initiate pairing, the pairing module in the find device service invokes the Bluetooth protocol stack to initiate pairing. The Bluetooth protocol stack performs pairing and connection with the find network device by using the BLE connection module in the Bluetooth chip.

After determining that the pairing is completed, the find network service sends a pairing complete notification to the find device app. Then, an accessory management module in the find network service sends accessory management information to an MLPS module, and the MLPS module transfers the accessory management information to the accessory management module in the MCU. The accessory management module in the MCU stores the accessory management information.

In some embodiments, the accessory management module in the MCU performs broadcast scanning on the find network device by using the Bluetooth chip. The Bluetooth chip reports a scanning result to the MCU. The MCU performs status management on the find network device based on service logic. The MCU may perform status management on the find network device when the electronic device is in a screen-off state or a standby state, or when the AP is not woken up.

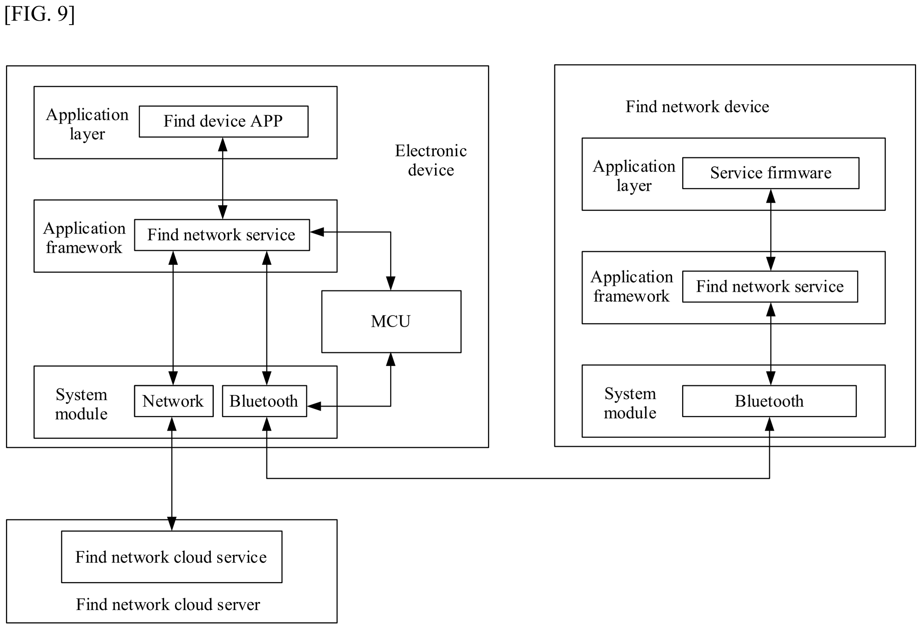

Based on the content described in the foregoing embodiments, an embodiment of this application further provides a find network device management system. FIG. 9 is a diagram of an architecture of a find network device management system according to an embodiment of this application. The system includes an electronic device, a find network device, and a find network cloud server. The electronic device and the find network cloud server may be connected through a network. The network may be a cellular network, or may be a Wi-Fi network. A Bluetooth link is established between the electronic device and the find network device in a Bluetooth manner.

An application layer of the electronic device may include a find device app, an application framework may include a find network service and an MCU, and a system module may include a network module and a Bluetooth module. For example, the MCU may include an accessory management module. An application layer of the find network device may include service firmware, an application framework may include a find network service, and a system module may include a Bluetooth module. The find network cloud server may include a find network cloud service.

In some embodiments, the find network cloud service is a service deployed by a find network on a cloud server to implement functions such as pairing of the find network device and offline location information storage.

The find device app of the electronic device may implement functions such as pairing and binding of the find network device and offline location query. The find network service may provide functions of pairing and binding, encryption and decryption verification, location encryption and reporting, and offline instruction storage and delivery. The network module in the electronic device is responsible for providing a network connection service, and is configured to connect to the find network cloud service. The accessory management module is configured to provide an accessory management function, and is responsible for maintaining a state of the find network device. All interactions between an upper-layer find network service and the find network device except pairing are processed by the accessory management module in the MCU.

The Bluetooth module provides BLE broadcast, scanning, and GATT connection functions.

In some embodiments, in response to a find network enabling operation triggered by a user on the find device app, the find network service in the electronic device scans a to-be-paired broadcast by using the Bluetooth module. In addition, the find network service is paired with the find network cloud service in the find network cloud server, to establish a binding relationship. The to-be-paired broadcast is sent by the find network device by using the Bluetooth module.

After the find network service obtains the to-be-paired broadcast through scanning, the find network service performs data interaction with the find network cloud service and the find network device, to complete a pairing process. The electronic device successfully performs pairing with the find network device, and a binding relationship is established.

After the pairing ends, the find network service sends accessory management information of the find network device to the accessory management module in the MCU. In response to another non-pairing operation triggered by the user on the find device app, the find network service generates an operation instruction, and sends the operation instruction to the accessory management module in the MCU. The MCU sends the received operation instruction to the find network device through a Bluetooth link established by the Bluetooth module. A find network service of the find network device receives the operation instruction sent by the Bluetooth module, and performs a related operation according to the received operation instruction.

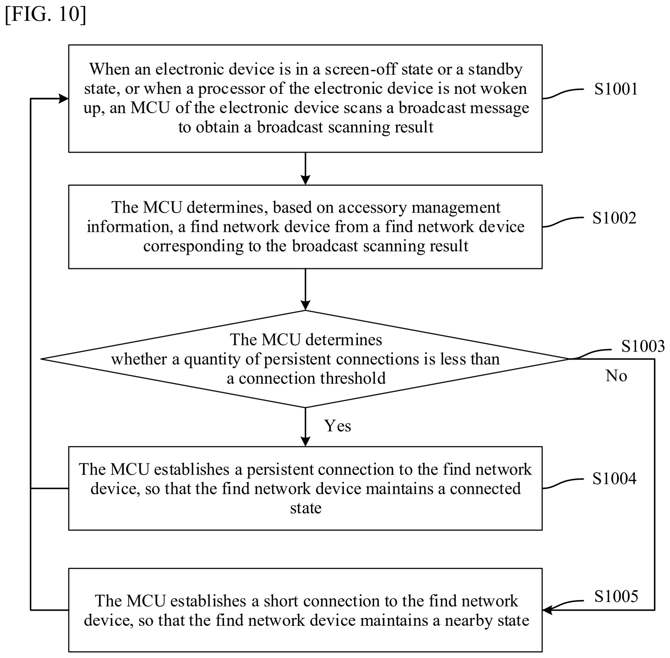

FIG. 10 is a schematic flowchart of performing status management on a find network device according to an embodiment of this application. The method is applied to an electronic device. As shown in FIG. 10, the method includes the following steps.

S1001: When the electronic device is in a screen-off state or a standby state, or when a processor of the electronic device is not woken up, an MCU of the electronic device scans a broadcast message to obtain a broadcast scanning result.

In some embodiments, the broadcast message includes but is not limited to a separate broadcast and a nearby broadcast.

S1002: The MCU determines, based on accessory management information, a find network device from a find network device corresponding to the broadcast scanning result.

S 1003: The MCU determines whether a quantity of persistent connections is less than a connection threshold; and if the quantity of persistent connections is less than the connection threshold, the MCU performs step S1004; or if the quantity of persistent connections is not less than the connection threshold, the MCU performs step S1005. The quantity of persistent connections is a quantity of persistent connections currently established between the electronic device and the find network device.

S1004: The MCU establishes a persistent connection to the find network device, so that the find network device maintains a connected state.

S1005: The MCU establishes a short connection to the find network device, so that the find network device maintains a nearby state.

Based on the content shown in FIG. 10, the MCU may perform status management on the find network device based on the accessory management information and the broadcast scanning result, so that the processor of the electronic device is not woken up in a status management process, to reduce power consumption and improve management efficiency on the find network device.

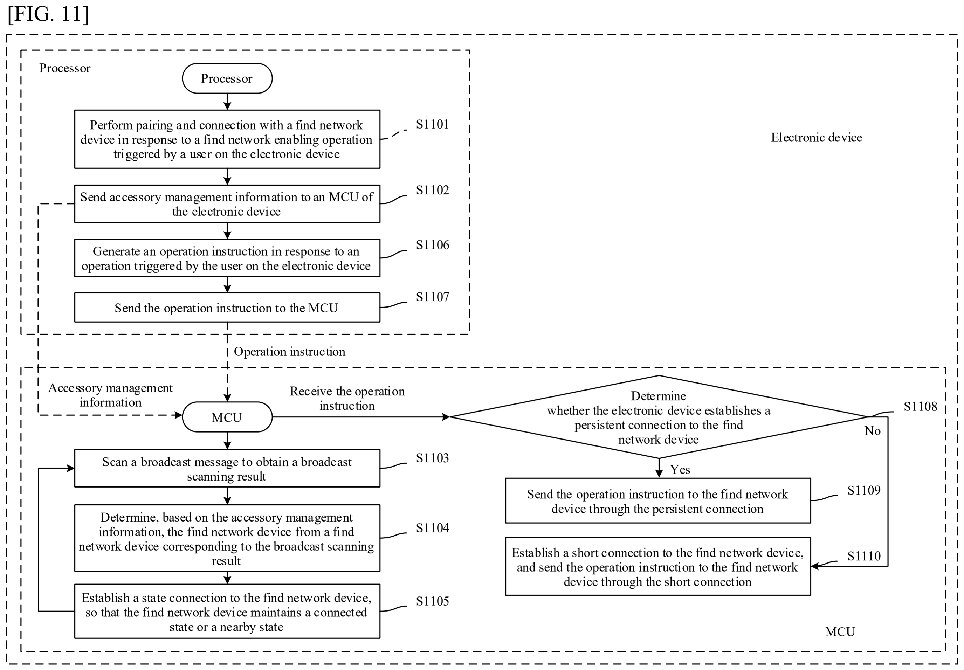

FIG. 11 is a complete schematic flowchart of a find network device management method according to an embodiment of this application. The method is applied to an electronic device. As shown in FIG. 11, the method includes the following steps.

S1101: The electronic device performs pairing and connection with a find network device in response to a find network enabling operation triggered by a user on the electronic device.

In some embodiments, a connection established by the electronic device by performing pairing and connection with the find network device may be a Bluetooth connection, or may be another wireless connection, for example, a cellular connection, or a Wi-Fi connection.

S1102: A processor of the electronic device sends accessory management information to an MCU of the electronic device, and the MCU receives and stores the accessory management information.

The accessory management information indicates information about interaction between the electronic device and the find network device.

S1103: The MCU scans a broadcast message to obtain a broadcast scanning result.

In some embodiments, the broadcast message includes but is not limited to a separate broadcast and a nearby broadcast.

S1104: The MCU determines, based on accessory management information, the find network device from a find network device corresponding to the broadcast scanning result.

S1105: The MCU establishes a state connection to the find network device, so that the find network device maintains a connected state or a nearby state.

An execution process of S 1105 is the same as an execution process of S1003 to S1005. Refer to S1003 to S1005. Details are not described herein again.

In some embodiments, after receiving the accessory management information, the MCU cyclically performs S1103 to S1105 until the electronic device disables a find network service. The MCU may perform S1103 to S1105 when the electronic device is in a screen-off state or a standby state, or when the processor of the electronic device is not woken up.

S1106: The processor generates an operation instruction in response to an operation triggered by the user on the electronic device.

In some embodiments, the operation triggered by the user includes but is not limited to: an unpairing operation, a ringing operation, a near field search operation, and a quick lost reminder operation. The operation instruction instructs the find network device to perform a related operation.

S1107: The processor sends the operation instruction to the MCU and the MCU receives the operation instruction.

S1108: The MCU determines whether the electronic device establishes a persistent connection to the find network device; and if the electronic device establishes the persistent connection to the find network device, performs step S1109; or if the electronic device does not establish the persistent connection to the find network device, performs step S1110.

S1109: The MCU sends the operation instruction to the find network device through the persistent connection.

S1110: The MCU establishes a short connection to the find network device, and sends the operation instruction to the find network device through the short connection.

Based on the content shown in FIG. 11, after the electronic device performs pairing and connection to the find network device, the processor of the electronic device sends the accessory management information to the MCU of the electronic device, and the MCU performs status management on the find network device based on the accessory management information. This can prevent the processor from being woken up in a status management process, so that power consumption can be reduced and management efficiency can be improved.

In the foregoing embodiments provided in this application, the method provided in embodiments of this application is described from a perspective of an electronic device serving as an execution body. To implement functions in the foregoing method provided in embodiments of this application, the electronic device may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on the foregoing embodiments, this application further provides an electronic device. The electronic device includes at least one processor, at least one memory, and a microcontroller unit. The at least one memory stores a computer program instruction. When the electronic device runs, the microcontroller unit performs a function performed by the electronic device in the find network device management method described in embodiments of this application, for example, performs S401 to S403 performed by the electronic device in the embodiment shown in FIG. 4.

Based on the foregoing embodiments, this application further provides an electronic device. The electronic device includes at least one memory and a microcontroller unit. The at least one memory stores a computer program instruction. When the electronic device runs, the microcontroller unit performs a function performed by the microcontroller unit in the find network device management method described in embodiments of this application, for example, performs S601 and S602 performed by the electronic device in the embodiment shown in FIG. 6.

For related features of a specific implementation of a find network device management apparatus, refer to the foregoing method. Details are not described herein again.

Based on a same technical concept, an embodiment of this application further provides a computer storage medium. The computer-readable storage medium includes a computer program. When the computer program is run on an electronic device, the electronic device is enabled to perform the foregoing method in embodiments of this application.

Based on a same technical concept, an embodiment of this application further provides a computer program product. The computer program product includes instructions. When the instructions are executed, a computer is enabled to perform the foregoing method in embodiments of this application.

Based on a same technical concept, an embodiment of this application further provides a chip. The chip includes a processor and a microcontroller unit. The processor sends accessory management information to the microcontroller unit, and the microcontroller unit implements, based on the accessory management information, a function performed by the microcontroller unit in the find network device management method described in embodiments of this application, for example, performs S601 and S602 performed by the electronic device in the embodiment shown in FIG. 6.

As described above, the foregoing embodiments are merely used to describe the technical solutions of this application in detail. However, descriptions in the foregoing embodiments are merely used to help understand the method in embodiments of this application, and should not be construed as a limitation on embodiments of this application. Any variation or replacement readily figured out by a person skilled in the art shall fall within the protection scope of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or a part of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the technical solutions of this application.

The foregoing descriptions are merely specific implementations of this application. Any variation or replacement readily figured out by a person skilled in the art based on the specific implementations provided in this application shall fall within the protection scope of this application.

## Claims

1. A find network device management method, applied to an electronic device, wherein the method comprises:
performing, by the electronic device, pairing and connection with a find network device;
sending, by a processor of the electronic device, accessory management information to a microcontroller unit of the electronic device, wherein the accessory management information indicates information about interaction between the electronic device and the find network device; and
receiving, by the microcontroller unit, the accessory management information, and performing status management on the find network device based on the accessory management information.

2. The method according to claim 1, wherein performing status management on the find network device based on the accessory management information comprises:
scanning, by the microcontroller unit, a broadcast message to obtain a broadcast scanning result;
determining, by the microcontroller unit based on the accessory management information, the find network device from a find network device corresponding to the broadcast scanning result; and
establishing, by the microcontroller unit, a state connection to the find network device, so that the find network device maintains a connected state or a nearby state.

3. The method according to claim 2, wherein establishing, by the microcontroller unit, the state connection to the find network device comprises:
determining, by the microcontroller unit, a quantity of persistent connections, wherein the quantity of persistent connections is a quantity of persistent connections currently established between the electronic device and the find network device; and
establishing, by the microcontroller unit, the state connection to the find network device based on the quantity of persistent connections.

4. The method according to claim 2 or 3, wherein establishing, by the microcontroller unit, the state connection to the find network device based on the quantity of persistent connections comprises:
when the quantity of persistent connections is equal to a connection threshold, establishing, by the microcontroller unit, a short connection to the find network device, so that the find network device maintains the nearby state; or
when the quantity of persistent connections is less than a connection threshold, establishing, by the microcontroller unit, the persistent connection to the find network device, so that the find network device maintains the connected state.

5. The method according to any one of claims 1 to 4, wherein after performing, by the electronic device, pairing and connection with the find network device, the method further comprises:
sending, by the processor, an operation instruction to the microcontroller unit, wherein the operation instruction instructs the find network device to perform a related operation; and
receiving, by the microcontroller unit, the operation instruction, and sending the operation instruction to the find network device.

6. The method according to claim 5, wherein sending the operation instruction to the find network device comprises:
when the persistent connection is established between the electronic device and the find network device, sending, by the microcontroller unit, the operation instruction to the find network device through the persistent connection; or
when the persistent connection is not established between the electronic device and the find network device, establishing, by the microcontroller unit, the short connection to the find network device, and sending the operation instruction to the find network device through the short connection.

7. The method according to any one of claims 1 to 6, wherein the processor is not woken up when the microcontroller unit performs status management on the find network device.

8. A find network device management method, applied to an electronic device, wherein the method comprises:
when the electronic device is in a screen-off state or a standby state, or when a processor of the electronic device is not woken up, scanning, by a microcontroller unit of the electronic device, a broadcast message to obtain a broadcast scanning result; and
performing, by the microcontroller unit, status management on a find network device based on an accessory management message and the broadcast scanning result, wherein the accessory management information indicates information about interaction between the electronic device and the find network device that are already paired.

9. The method according to claim 8, wherein performing, by the microcontroller unit, status management on the find network device based on the accessory management message and the broadcast scanning result comprises:
determining, by the microcontroller unit based on the accessory management information, the find network device from a find network device corresponding to the broadcast scanning result; and
establishing, by the microcontroller unit, a state connection to the find network device, so that the find network device maintains a connected state or a nearby state.

10. An electronic device, comprising a processor, a microcontroller unit, and a
memory, wherein
the memory stores one or more computer programs; and
when the one or more computer programs stored in the memory are executed by the processor and the microcontroller unit, the electronic device is enabled to perform the method according to any one of claims 1 to 7.

11. An electronic device, comprising a microcontroller unit and a memory, wherein
the memory stores one or more computer programs; and
when the one or more computer programs stored in the memory are executed by the microcontroller unit, the electronic device is enabled to perform the method according to claim 8 or 9.

12. A computer-readable storage medium, wherein the computer-readable storage medium comprises a computer program, and when the computer program is executed on an electronic device, the electronic device is enabled to perform the method according to any one of claims 1 to 7, or perform the method according to claim 8 or 9.

13. A chip, wherein the chip comprises a processor and a microcontroller unit, the processor sends accessory management information to the microcontroller unit, and the microcontroller unit implements the method according to claim 8 or 9 based on the accessory management information.
